# EUROPÄISCHE PATENTANMELDUNG

(11) **EP 1 136 766 A1**
(43) Veröffentlichungstag der Anmeldung: **26.09.2001**
(21) Anmeldenummer: 00810948.0
(22) Anmeldetag: 13.10.2000
(51) Int. Cl.: F24J 2/46, F24J 2/00

(54) **Baukastensystem für Solar. oder Wärmespeicher, zerlegbar, modular zusammensetz- und erweiterbar**

(30) Priorität: 04.01.2000 CH 82000
(71) Anmelder: Bütler-Meier, Bernhard, 5603 Staufen (CH)
(72) Erfinder: Bütler-Meier, Bernhard, 5603 Staufen (CH)

(57) **Zusammenfassung**

Der Solar- oder Wärmespeicher ist so konstruiert, dass er jederzeit zerlegbar und wieder montierbar ist. Er besteht aus Boden (1), Rückwand (2), Frontseite (3), linke Seitenwand (4), rechte Seitenwand (5) und Deckel (6). Der Speicher ist durch eine geschickte Kombination der erwähnten Elemente und weiterer Elemente (8, 9) in der Grösse flexibel ausbaubar. Bei erweiterten Speichern werden zur Abstützung der Deckel (6) je nach Kombination die entsprechenden Haltestangen (10, 11, 12, 13) benötigt. Dank der Verwendung von speziellen Elementen (7) kann die Energie auch für unterschiedliche Zwecke genutzt werden. Die Energie kann über die speziellen Elemente bei Bedarf auch zu einem Verbraucher oder anderen Speicher geleitet werden. Je nach Bedarf kann so ein Kocher, Wärmespeicher, Antrieb für Kleingeräte, Energiequelle für einen Motor etc. zusammengebaut werden.

## Beschreibung

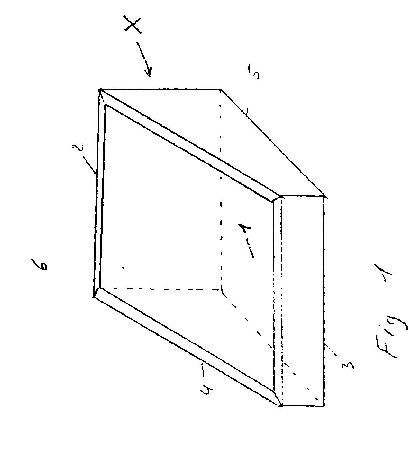

Die Erfindung betrifft ein Baukastensystem für einen Solar- oder Wärmespeicher, der zerlegbar sowie modular zusammensetz- und erweiterbar ist, nämlich ein Baukastensystem für einen Solar- oder Wärmespeicher gemäss dem Oberbegriff des Anspruchs 1.
Das Baukastensystem für den Solar- oder Wärmespeicher kann aus jedem beliebigen Material wie z.B. Holz, Karton, Holz mit Isolation, Kunststoff, formfeste Isolation etc. bestehen und die Elemente können jede beliebige geometrische Form haben wie z.B. quadratische oder 3eckige Grundform etc. Der Deckel besteht aus einem lichtdurchlässigen Material, z.B. Glas. Der Einfachheit halber wird die Beschreibung nur an einem Baukastensystem für einen Solar- oder Wärmespeicher mit rechteckiger Grundform wie in Fig. 1 dargestellt durchgeführt.

Bisherige Solar- oder Wärmespeicher, sogenannte Solarkocher, haben fixe Abmessungen und sind weder erweiterbar noch zerlegbar. Sie nutzen die Wärmeenergie in der Regel zum kochen, sterilisieren von Geräten oder erhitzen von Flüssigkeiten.
Ihre Nachteile sind die Inflexibilität in der Grösse und in der Anwendung, sowie der Platzbedarf bei Nichtgebrauch, da sie nicht zerlegt werden können.

Der Solar- und Wärmespeicher im Baukastensystem gemäss dem Oberbegriff des Anspruchs 1 ist bei Nichtgebrauch zerlegbar und kann raumsparend gelagert werden. Dank dem Baukastensystem kann er optimal an die für den aktuellen Verwendungszweck gewünschte Grösse angepasst werden. Er besteht aus einem Grundmodell, welches aus einem Boden, einer Frontseite, einer Rückseite, einer linken Wand, einer rechten Wand sowie einem Deckel besteht. Das Grundmodell ist mit weiteren Elementen kombinierbar, die einen Ausbau des Solar- und Wärmespeichers im Baukastensystem in die Breite, in die Tiefe und in die Höhe erlauben. Ebenso kann durch die Verwendung spezieller Elemente die gespeicherte Solar- oder Wärmeenergie zu unterschiedlichen Zwecken genutzt und bei Bedarf einem Verbraucher oder Speicher zugeführt werden.

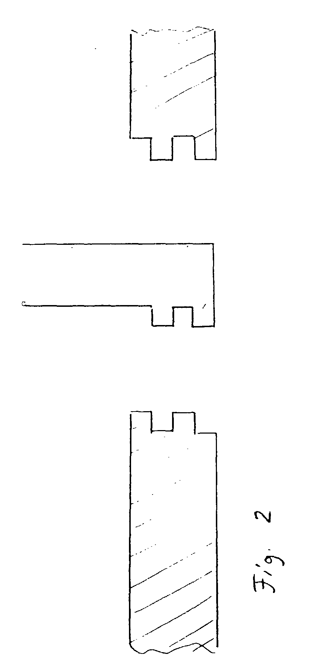

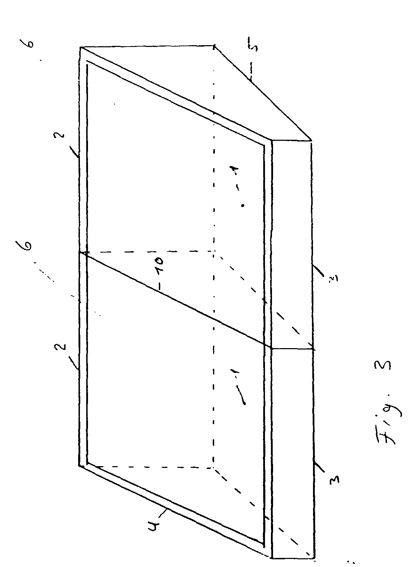

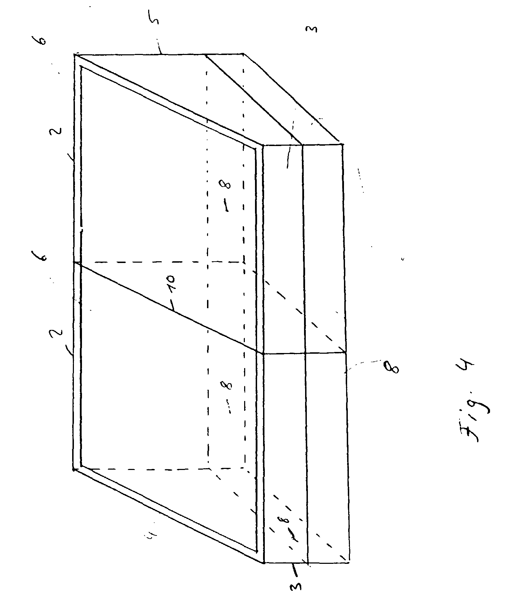

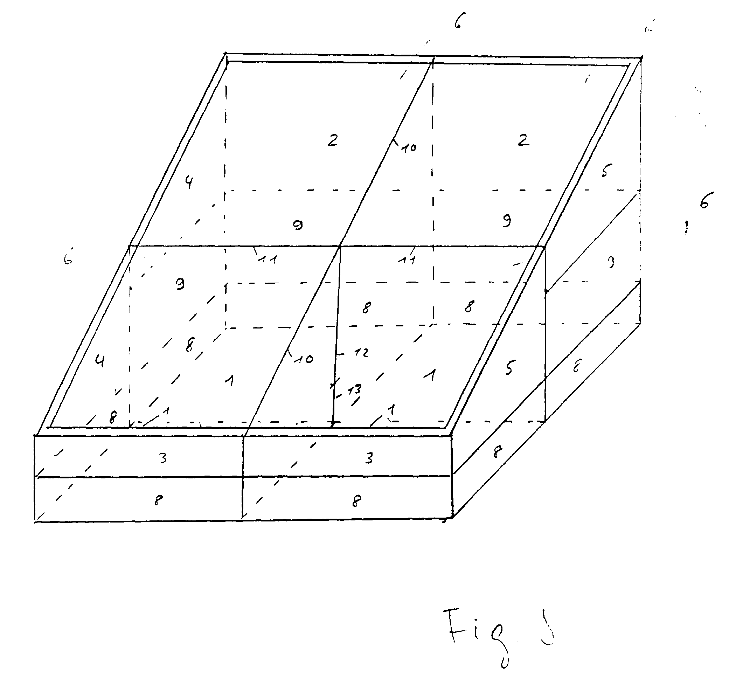

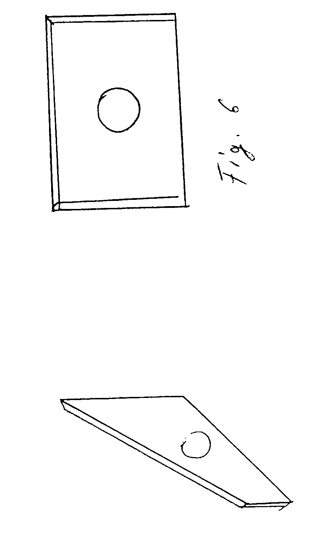

Nachfolgend wird nun anhand der Zeichnung ein Ausführungsbeispiel der Erfindung beschrieben. In der Zeichnung zeigt Fig. 1 eine Variante des Grundmodelles, als Ganzes mit X bezeichnet, Fig. 2 eine mögliche Ausgestaltung der Uebergänge zwischen den Elementen, Fig. 3 bis Fig. 5 mögliche Erweiterungen (ohne Anspruch auf Vollständigkeit) und Fig. 6 eine mögliche Ausgestaltung von speziellen Elementen um einen Zusatznutzen zu generieren. In der Zeichnung zeigt Fig. 1 eine Variante des Grundmodelles des Baukastensystems, als Ganzes mit X bezeichnet, bestehend aus den Elementen Boden 1, Rückwand 2, Frontseite 3, linke Seitenwand 4, rechte Seitenwandwand 5 und Deckel 6. Um einen guten Wirkungsgrad zu erreichen, müssen die Elemente 1 bis 5 eine gute Isolation aufweisen. Der Deckel 6 besteht aus einem lichtdurchlässigen Material, z.B. Glas. An den Innenflächen sind die Elemente 1 bis 5 so gestaltet, dass sie die Sonnenstrahlen aufnehmen und in Wärme umwandeln. Die Uebergänge zwischen den Elementen 1 bis 5 sind so ausgebildet, dass sowohl senkrecht (wie bei der Grundvariante) als auch waagrecht (erweiterbar) das nächste Element des Baukastensystems angebaut werden kann. Eine mögliche Form der Uebergangsgestaltung ist in Fig. 2 dargestellt. Die Elemente werden mit einer lösbaren Verbindungstechnik (z.B. Verschraubung wie bei Kleiderschränken) zusammengehalten. Die Erweiterung kann mit den Elementen 1 bis 6 des Grundmodells erfolgen. Sie kann jedoch auch mit speziellen Elementen 7 und weiteren Elementen 8 bis 9 gemacht werden. Weitere Elemente, die jede beliebige angepasste Form und Grösse haben, sind auch möglich.
Für einen im Baukastensystem erweiterten Solar- und Wärmespeicher werden als Ergänzung auch Haltestangen für die Halterung bzw. Stabilisierung der Deckel verwendet. Erfolgt die Erweiterung nur in die Breite und die Höhe, braucht es eine Haltestange 10 pro Erweiterungsmodul. Bei einer Erweiterung in dieTiefe (nach hinten) und in die Höhe braucht es eine Haltestange 11 pro Erweiterungsmodul. Erweiterungen nur in die Höhe brauchen keine zusätzlichen Haltestangen. Bei einer Erweiterung in die Breite und in die Tiefe braucht es neben den erwähnten Haltestangen 10 bis 11 zusätzlich eine Stützstange 12. Wird zusätzlich noch in der Höhe erweitert, ist pro Höhenerweiterung eine Stützstange 13 notwendig. Mögliche Ausführungen von im Baukastensystem erweiterten Solar- und Wärmespeichern sind in Fig. 3 bis Fig. 5. dargestellt.

## Patentansprüche

1. Baukastensystem für einen Solar- oder Wärmespeicher, **dadurch gekennzeichnet, dass** der Speicher (X) aus verschiedenen Elementen (1-6) einfach zerlegbar und wieder zusammenbaubar ist.

2. Baukastensystem nach Anspruch 1, **dadurch gekennzeichnet, dass** der Speicher (X) zerlegbar und mit verschiedenen Elementen (1 - 6, 8, 9) und Haltestangen (10 - 13) auf die gewünschte Dimension flexibel ausbau- bzw. erweiterbar und wieder zusammenbaubar ist

3. Baukastensystem nach einem der Ansprüche 1 bis 2, **dadurch gekennzeichnet, dass** durch die Verwendung spezieller Baukastenelemente (7) die gespeicherte Solar- oder Wärmeenergie zu unterschiedlichen Zwecken genutzt und bei Bedarf einem Verbraucher oder Speicher zugeführt werden kann.
